(19) **Europäisches Patentamt / European Patent Office / Office européen des brevets**

(11) **EP 4 628 450 A1**

(12) **EUROPEAN PATENT APPLICATION**
published in accordance with Art. 153(4) EPC

(43) Date of publication:
**08.10.2025 Bulletin 2025/41**

(21) Application number: **23897840.7**

(22) Date of filing: **29.11.2023**

(51) International Patent Classification (IPC):
**C01G 25/02** (2006.01)    **C04B 35/488** (2006.01)

(52) Cooperative Patent Classification (CPC):
**C01G 25/02; C04B 35/488**

(86) International application number:
**PCT/JP2023/042776**

(87) International publication number:
**WO 2024/117194 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.11.2022 JP 2022192258**

(71) Applicant: **Tosoh Corporation
Yamaguchi 746-8501 (JP)**

(72) Inventors:
• **HASEGAWA Yuusuke
  Shunan-shi Yamaguchi 746-8501 (JP)**
• **HOSOI Kouhei
  Shunan-shi Yamaguchi 746-8501 (JP)**

• **NAGAYAMA Hitoshi
  Shunan-shi Yamaguchi 746-8501 (JP)**
• **TSUCHIYA Satoshi
  Shunan-shi Yamaguchi 746-8501 (JP)**
• **FUKIAGE Taku
  Shunan-shi Yamaguchi 746-8501 (JP)**
• **KAWAMURA Kenta
  Shunan-shi Yamaguchi 746-8501 (JP)**
• **ITOU Akiko
  Shunan-shi Yamaguchi 746-8501 (JP)**
• **SUGAWARA Ryou
  Shunan-shi Yamaguchi 746-8501 (JP)**

(74) Representative: **Müller-Boré & Partner
Patentanwälte PartG mbB
Friedenheimer Brücke 21
80639 München (DE)**

(54) **POWDER**

(57)    Provided is at least one of: a powder capable of providing zirconia sintered bodies that contain manganese as a main coloring element, assume a black color, have high fracture toughness, and exhibit only a small variation in color tone due to different sintering temperatures; and a method for producing the powder. The powder of the present disclosure is a powder containing zirconia containing yttrium as a stabilizing element, a manganese compound and alumina. The content of the stabilizing element in terms of oxide is 1.3 mol% or more and less than 2.0 mol% based on the total amount of the zirconia and the stabilizing element in terms of oxide. The content of the alumina is 0.2% by mass or more and 1.5% by mass or less based on the total mass of the powder, and the content of the manganese compound is 0.1 % by mass or more and 0.6% by mass or less based on the total mass of the powder.

EP 4 628 450 A1

# EP 4 628 450 A1

## Description

### TECHNICAL FIELD

The present disclosure relates to a powder serving as a precursor of a zirconia sintered body assuming a black color and a method for producing a sintered body using the powder.

### BACKGROUND ART

Zirconia sintered bodies have been widely used for decorative members, exterior members, semiconductor members, structural members etc. Zirconia sintered bodies assuming a black color have glossiness, can impart a sense of high quality, and have therefore been used as highly decorative members. Zirconia sintered bodies used for these members are required to be decorative and also be less fragile. Therefore, it has been contemplated to use so-called high-toughness zirconia sintered bodies, which are zirconia sintered bodies containing yttrium as a stabilizing element and having improved fracture toughness achieved by reducing the content of yttrium.

One example of the high-toughness zirconia sintered body assuming a black color is a zirconia powder containing yttria-stabilized zirconia with an yttria content of about 2 mol%, alumina and coloring elements (see Patent Document 1). Patent Document 1 discloses the use of Fe, Ti, Co and Cr as the coloring elements.

Patent Document 2 discloses a zirconia powder that uses less expensive manganese as a coloring element and contains 1.6 mol% of yttria as a stabilizer, 0.25% by mass of alumina and 0.05% by mass of $MnO_2$ and also discloses a sintered body obtained using the zirconia powder.

### PRIOR ART DOCUMENTS

### PATENT DOCUMENTS

| | |
|---|---|
| Patent Document 1: | JP-A-2022-34289 |
| Patent Document 2: | WO2022/075346 |

### DISCLOSURE OF INVENTION

### TECHNICAL PROBLEM

The sintered body in Patent Document 1 contains multiple elements as essential coloring elements, and its production cost is likely to be high. The sintered body in Patent Document 2 has a light color tone and is not a sintered body assuming a black color.

It is an object of the present disclosure to provide at least one of: a powder capable of providing zirconia sintered bodies that contain manganese as a main coloring element, assume a black color, have high fracture toughness, and exhibit only a small variation in color tone due to different sintering temperatures; and a method for producing the powder.

### SOLUTION TO PROBLEM

The inventors of the present disclosure conducted studies on high-toughness zirconia sintered bodies containing manganese as a main coloring element and assuming a black color. The inventors thus found that, when the content of the coloring element in the high-toughness zirconia sintered bodies was high, defects such as cracks occurred during sintering and the sintered bodies themselves could not be obtained. Even when the sintered bodies could be obtained, it was found that the color tone of the sintered bodies containing manganese as the main coloring element varied from production lot to production lot. The inventors focused attention on the fact that the variations are influenced not by the temperature setting of the sintering furnace such as temperature variations in the sintering furnace but by the actual sintering temperatures. On the basis of these findings, the inventors of the present disclosure have found that, even for high-toughness zirconia sintered bodies containing manganese as a main coloring element and assuming a black color, the color tone variations due to different sintering temperatures can be reduced by adding alumina serving as a coloring element assuming a white color and controlling the alumina content and the manganese compound content such that they satisfy a specific relation.

Specifically, the present invention is as disclosed in the claims, and the present disclosure is summarized as follows.

[1] A powder comprising: zirconia containing yttrium as a stabilizing element; a manganese compound; and alumina,

wherein a content of the stabilizing element in terms of oxide is 1.3 mol% or more and less than 2.0 mol% based on a total amount of the zirconia and the stabilizing element in terms of oxide,
wherein a content of the alumina is 0.2% by mass or more and 1.5% by mass or less based on a total mass of the powder, and
wherein a content of the manganese compound is 0.1% by mass or more and 0.6% by mass or less based on the total mass of the powder.

[2] The powder according to [1], wherein a monoclinic fraction of the zirconia is more than 70%, wherein a crystallite size of monoclinic zirconia is more than 23 nm and 80 nm or less, and wherein the powder has a BET specific surface area of 25 $m^2$/g or less.

[3] The powder according to [1] or [2], wherein the manganese compound is at least one selected from the group consisting of manganese monoxide, manganese dioxide, trimanganese dioxide and trimanganese tetroxide.

[4] The powder according to any one of [1] to [3], wherein the alumina is at least one of an alumina sol and an alumina powder.

[5] The powder according to any one of [1] to [4], wherein a ratio of a mass of the alumina in terms of $Al_2O_3$ to a mass of the manganese compound in terms of $Mn_3O_4$ is 0.1 or more.

[6] The powder according to any one of [1] to [5], wherein crystal phases of the zirconia include monoclinic zirconia and tetragonal zirconia.

[7] The powder according to [6], wherein a ratio of a crystallite size of the monoclinic zirconia to a crystallite size of the tetragonal zirconia is 0.7 or more and 1.2 or less.

[8] The powder according to any one of [1] to [7], wherein the powder has a median size of 0.1 $\mu$m or more and 1.0 $\mu$m or less.

[9] The powder according to any one of [1] to [8], wherein a volumetric particle size distribution curve is a multimodal distribution.

[10] The powder according to any one of [1] to [9], wherein, when a procedure including charging a mold having a diameter of 25 mm with 3 $\pm$ 0.3 g of the powder and subjecting the powder to uniaxial compression molding at a pressure of 70 $\pm$ 5 MPa and CIP processing at a pressure of 196 $\pm$ 5 MPa is repeated to produce five green bodies and the five green bodies are pressureless sintered at respective sintering temperatures of 1200°C, 1250°C, 1300°C, 1350°C and 1400°C in an air atmosphere at a heating rate of 100°C/hour for a holding time at the respective sintering temperatures of 2 hours to prepare five sintered bodies, then a difference between maximum and minimum lightness L* values of the five sintered bodies is 1.4 or less.

[11] A method for producing a sintered body, the method comprising the step of pressureless sintering a green body containing the powder according to any one of [1] to [10] at a temperature of 1200°C or higher and 1400°C or lower.

ADVANTAGEOUS EFFECTS OF INVENTION

The present disclosure can provide at least one of: a powder capable of providing zirconia sintered bodies that contain manganese as a main coloring element, assume a black color, have high fracture toughness, and exhibit only a small variation in color tone due to different sintering temperatures; and a method for producing the powder.

DESCRIPTION OF EMBODIMENTS

The present disclosure will be described by way of examples of embodiments. The present disclosure encompasses any combination of structures and parameters disclosed in the present description and also encompasses any combination of upper limits and lower limits disclosed in the present description. Main terms used in the embodiments are as follows. The terms "monoclinic fraction" and "tetragonal fraction" refer to the ratio of monoclinic zirconia and the ratio of tetragonal zirconia, respectively, in the crystal phases of zirconia. The term "monoclinic intensity ratio" refers to the ratio of the integrated intensity of an XRD peak corresponding to the (11-1) plane of the monoclinic zirconia to the integrated intensity of an XRD peak corresponding to the (111) plane of the monoclinic zirconia in the crystal phases of zirconia.

For a powder, a powder X-ray diffraction (hereinafter referred to also as "XRD") pattern of the powder is used. For a sintered body, an XRD pattern of a surface of the sintered body after mirror polishing is used. The monoclinic fraction can be determined using the following formula (1), and the tetragonal fraction can be determined using the following formula (2). The monoclinic intensity ratio can be determined using the following formula (3).

$$f_m = \{I_m(111) + I_m(11\text{-}1)\} / [I_m(111) + I_m(11\text{-}1) + I_t(111) + I_c(111)] \times 100 \qquad (1)$$

$$f_t = I_t(111) / [I_m(111) + I_m(11\text{-}1) + I_t(111) + I_c(111)] \times 100 \qquad (2)$$

$$M_{(11\text{-}1)/(111)} = \{I_m(11\text{-}1) / I_m(111)\} \qquad (3)$$

In formulas (1) to (3), $f_m$ is the monoclinic fraction (%), and ft is the tetragonal fraction (%). $M_{(11\text{-}1)/(111)}$ is the monoclinic intensity ratio, and $I_m(111)$ and $I_m(11\text{-}1)$ are the integrated intensities of XRD peaks corresponding to the (111) and (11-1) planes, respectively, of monoclinic zirconia. $I_t(111)$ is the integrated intensity of an XRD peak corresponding to the (111) plane of tetragonal zirconia, and $I_c(111)$ is the integrated intensity of an XRD peak corresponding to the (111) plane of cubic zirconia.
Therefore, the monoclinic fraction and the tetragonal fraction can be determined as the integrated intensity ratios (%).
The conditions for the measurement of the XRD patterns may be the following conditions.

Radiation source: CuKα line (λ = 0.15418 nm)
Measurement mode: continuous scanning
Scanning speed: 4°/minute
Step width: 0.02°
Measurement range: 2θ = 26° to 33°

In the XRD pattern measurement, XRD peaks corresponding to crystal planes of zirconia are measured as peaks with peak tops at the following 2θ values.

XRD peak corresponding to (111) plane of monoclinic zirconia: 2θ = 31 ± 0.5°
XRD peak corresponding to (11-1) plane of monoclinic zirconia: 2θ = 28 ± 0.5°
Measured XRD peaks corresponding to the (111) planes of tetragonal zirconia and cubic zirconia overlap each other, and the 2θ of each peak top is 2θ = 30 ± 0.5°. Therefore, the integrated intensity corresponding to "$I_t(111) + I_c(111)$" in formulas (1) and (2) is obtained as one value.

The integrated intensity of the XRD peak of each crystal plane may be determined using "SmartLab-Studio 2 (manufactured by Rigaku)" as a computation program to compute the integrated intensity of the diffraction peak (XRD peak).
In the XRD measurement on a sintered body, the sintered body used for the XRD measurement is a surface-polished sintered body. The surface-polished sintered body is prepared by subjecting the measurement surface of the sintered body to the following mirror-polishing processing. The surface of the sintered body after sintering is ground using a surface grinding machine and then subjected to automatic polishing using an abrasive cloth, then to automatic polishing using a diamond slurry having an average grain size of 3 μm and then to automatic polishing using 0.03 μm colloidal silica.
The term "crystallite size of monoclinic zirconia" (hereinafter referred to also as "$D_m$") refers to a value determined from a powder XRD pattern using formula (4) below. The term "crystallite size of tetragonal zirconia" (hereinafter referred to also as "Dt") refers to a value determined from the powder XRD pattern using formula (5) below.

$$D_m = \kappa\lambda / (\beta\cos\theta_m) \qquad (4)$$

$$D_t = \kappa\lambda / (\beta\cos\theta_t) \qquad (5)$$

In formulas (4) and (5), $D_m$ is the crystallite size (nm) of the monoclinic zirconia, and Dt is the crystallite size (nm) of the tetragonal zirconia. κ is the Scherrer constant (κ = 0.940), and λ is the wavelength (0.15418 nm) of the light source used for the XRD measurement. β is the half width (rad). $\theta_m$ is the Bragg angle (rad) of reflection corresponding to the (11-1) plane of the monoclinic zirconia in the XRD measurement, and $\theta_t$ is the Bragg angle (rad) of reflection corresponding to the (111) plane of the tetragonal zirconia in the XRD measurement.
The term "BET specific surface area" refers to a value obtained by the BET multi-point method using nitrogen ($N_2$) as an adsorbent according to JIS R 1626-1996.
The term "median size" (hereinafter referred to also as "D50") refers to a particle size corresponding to a volume ratio of 50% in a cumulative volumetric particle size distribution curve obtained by volumetric particle size distribution measurement by a laser diffraction method.

The term "particle size distribution curve" refers to a curve representing the distribution of powder particle sizes obtained by volumetric particle size distribution measurement using the laser diffraction method.

The term "fracture toughness value" refers to the value of fracture toughness (MPa·m$^{0.5}$) measured by a method according to the SEPB method specified in JIS R 1607. The fracture toughness value may be measured at a span of 16 mm using a columnar sintered body sample with a width of 4 mm and a thickness of 3 mm. The average of ten measurements may be used as the fracture toughness value of the sintered bodies. In JIS R 1607, two fracture toughness measurement methods, i.e., the IF method and the SEPB method, are specified. The values measured by the IF method tend to be larger than those measured by the SEPB method. Moreover, since the IF method is a simple measurement method, measurement-to-measurement variations in facture toughness are large. Therefore, the absolute fracture toughness values in the present embodiment cannot be compared with the absolute fracture toughness values measured by the IF method. Similarly, the absolute fracture toughness values measured by a method other than the SEPB method cannot be compared with the absolute fracture toughness values measured by the SEPB method.

The term "bending strength" refers to a three-point bending strength value determined by a three-point bending test according to JIS R 1601. The bending strength is measured at a span of 30 mm using a columnar sintered body sample with a width of 4 mm and a thickness of 3 mm. The average of ten measurements may be used as the bending strength of the sintered bodies.

The term "relative density" refers to the ratio (%) of measured density to true density. The measured density of a green body is the ratio (g/cm$^3$) of the mass determined by mass measurement to the volume determined by dimensional measurement. The measured density of a sintered body is the ratio (g/cm$^3$) of the mass determined by mass measurement to the volume measured by the Archimedes method. The true density is a density (g/cm$^3$) determined from the following formulas (6) to (9).

$$A = 0.5080 + 0.06980X / (100 + X) \qquad (6)$$

$$C = 0.5195 - 0.06180X / (100 + X) \qquad (7)$$

$$\rho_Z = [124.25 (100 - X) + 225.81X] / [150.5 (100 + X)A^2C] \qquad (8)$$

$$\rho_0 = 100 / [(Y_A / 3.987) + (Y_M / 4.860) + (100 - Y_A - Y_M) / \rho_Z] \qquad (9)$$

In formulas (6) to (9), $\rho_0$ is the true density, and $\rho_Z$ is the true density of zirconia. A and C are constants. X is the molar ratio (mol%) of the amount of yttrium in terms of oxide to the total amount of zirconia ($ZrO_2$) and yttrium (Y) in terms of oxide, and $Y_A$ and $Y_M$ are the ratio (% by mass) of the mass of alumina in terms of $Al_2O_3$ and the ratio (% by mass) of the mass of manganese in terms of $Mn_3O_4$, respectively, to the total mass of zirconia, yttrium, alumina and manganese in terms of $ZrO_2$, $Y_2O_3$, $Al_2O_3$ and $Mn_3O_4$, respectively, in the green body or the sintered body.

When the green body or the sintered body contains toning coloring agents (described later), the true density may be determined using formula (9') instead of formula (9).

$$\rho_0 = 100 / [(Y_A / 3.987) + (Y_M / 4.860) + (Y_{N1} / M_{N1})$$
$$\cdots + (Y_{Nn} / M_{Nn}) + (100 - Y_A - Y_M - Y_{N1} - \cdots - Y_{Nn}) / \rho_Z] \qquad (9')$$

In formula (9'), $Y_{N1}, \cdots, Y_{Nn}$ are the ratios (% by mass) of the masses of toning coloring agents in terms of their respective oxides to the total mass (described later) of the powder, and $M_{N1}, \cdots, M_{Nn}$ are masses per mole (g/mol) of the toning coloring agents in terms of their respective oxides. n is an integer.

The term "color tone" refers to a quantified color tone in the L*a*b* color system using a method according to JIS Z 8781-5 corresponding to ISO 11664-4 and is a color tone corresponding to a set of L*a*b* coordinates specified by lightness L* and hues a* and b*. The term "color tone variation" means the variation in lightness L* values in the L*a*b* color system. The color tone variation and the color tone may be measured using a standard spectrophotometer (such as CM-700d manufactured by KONICA MINOLTA, INC.) under the following conditions.

Light source: F2 light source
Viewing angle: 10°
Measurement method: SCI
Background: black background

Measurement sample: (sample thickness) 1.3 $\pm$ 0.1 mm

[Powder]

The powder in the present embodiment is a powder composed mainly of zirconia (a so-called zirconia powder containing zirconia as a main component) but is not limited to a powder composed only of zirconia. The powder in the present embodiment is a powder containing a component other than zirconia and, in particular, is a powder containing at least zirconia containing yttrium as a stabilizing element, a manganese compound and alumina. Preferably, the powder in the present embodiment may be essentially a powder containing zirconia containing yttrium as a stabilizing element, a manganese compound and alumina and may be a powder that is composed of zirconia containing yttrium and contains a manganese compound and alumina.

The zirconia containing yttrium as a stabilizing element is zirconia stabilized with yttrium, i.e., yttrium-stabilized zirconia. Yttrium is contained in the zirconia as a stabilizing element. The crystal phases of the zirconia are thereby stabilized.

It is only necessary that the content of the yttrium (which hereinafter may be referred to also as the "yttrium content") in the powder be such that the zirconia is partially stabilized. The yttrium content is determined as the ratio (mol%) of the amount of the yttrium in terms of $Y_2O_3$ to the total amount of the zirconia ($ZrO_2$) and the yttrium in terms of $Y_2O_3$ (= $\{Y_2O_3 / (ZrO_2 + Y_2O_3)\} \times 100$ [mol%]).

The content of the yttrium in the powder in the present embodiment is preferably 1.3 mol% or more and less than 2.0 mol% because the fracture toughness value measured by the SEPB method tends to be higher. For example, the yttrium content is 1.3 mol% or more, 1.4 mol% or more, 1.5 mol% or more or 1.6 mol% or more and is less than 2.0 mol%, 1.9 mol% or less, 1.8 mol% or less, 1.7 mol% or less or 1.6 mol% or less. The yttrium content may be, for example, 1.3 mol% or more and less than 2.0 mol%, 1.3 mol% or more and 1.9 mol% or less, 1.3 mol% or more and 1.8 mol% or less, 1.3 mol% or more and 1.7 mol% or less, 1.3 mol% or more and 1.6 mol% or less, 1.4 mol% or more and less than 2.0 mol%, 1.4 mol% or more and 1.9 mol% or less, 1.4 mol% or more and 1.8 mol% or less, 1.4 mol% or more and 1.7 mol% or less, 1.4 mol% or more and 1.6 mol% or less, 1.5 mol% or more and less than 2.0 mol%, 1.5 mol% or more and 1.9 mol% or less, 1.5 mol% or more and 1.8 mol% or less, 1.5 mol% or more and 1.7 mol% or less, 1.5 mol% or more and 1.6 mol% or less, 1.6 mol% or more and less than 2.0 mol%, 1.6 mol% or more and 1.9 mol% or less, 1.6 mol% or more and 1.8 mol% or less or 1.6 mol% or more and 1.7 mol% or less.

It is preferable that the yttrium is dissolved in the zirconia to form a solid solution, and it is more preferable that the powder in the present embodiment contains no undissolved yttrium. In the present embodiment, when no XRD peak derived from an yttrium compound is detected in the XRD pattern, it can be considered that no undissolved yttrium is contained (i.e., all the yttrium is dissolved in the zirconia to form a solid solution).

It is preferable that the powder in the present embodiment contains no stabilizing element other than yttrium. However, the powder in the present embodiment may contain another stabilizing element so long as the effects of the powder are not impaired. The other stabilizing element may be at least one of calcium (Ca) and magnesium (Mg).

Monoclinic zirconia, tetragonal zirconia and cubic zirconia are known as main crystal phases of zirconia. In the present embodiment, it may be considered that the crystal phases of zirconia include at least one of these three crystal phases. The zirconia in the powder in the present embodiment contains preferably monoclinic zirconia, contains more preferably monoclinic zirconia and at least one of tetragonal zirconia and cubic zirconia, and contains still more preferably monoclinic zirconia and tetragonal zirconia. In the powder in the present embodiment, the yttrium content is set such that the crystal phases of the powder include monoclinic zirconia and tetragonal zirconia.

The monoclinic fraction is preferably more than 70%, more preferably 80% or more and still more preferably 85% or more. It is only necessary that the monoclinic fraction be 100% or less. When the zirconia includes at least one of tetragonal zirconia and cubic zirconia, the monoclinic fraction is less than 100% and may be 99% or less or 90% or less. The monoclinic fraction is, for example, more than 70% and 100% or less, 80% or more and 100% or less or 85% or more and 95% or less and may be 90% or more and 100% or less, 95% or more and less than 100% or 95% or more and 99% or less.

The tetragonal fraction is 30% or less, less than 30%, less than 20% or 15% or less and may be 10% or less or 7% or less. When the zirconia contains no tetragonal zirconia, the tetragonal fraction is 0%. However, the tetragonal fraction may be 0% or more, more than 0% or 10% or more. For example, the tetragonal fraction may be 0% or more and less than 15%, 0% or more and less than 20%, 0% or more and less than 30%, more than 0% and less than 15%, more than 0% and less than 20%, 10% or more and less than 30% or 10% or more and 15% or less.

Preferably, in the powder in the present embodiment, the crystal phases of the zirconia in the powder in the present embodiment include monoclinic zirconia and tetragonal zirconia. In this case, the sum of the monoclinic fraction and the tetragonal fraction is 100%.

In the chemical composition range of the powder in the present embodiment, the crystal phases of the zirconia may be determined from XRD peaks corresponding to the XRD peaks of the zirconia crystal phases found in the XRD pattern of the powder in the present embodiment.

The crystallite size ($D_m$) of the monoclinic zirconia is preferably more than 23 nm, 30 nm or more, 31 nm or more, 32 nm or more or 34 nm or more, is 80 nm or less, 60 nm or less, 50 nm or less, 45 nm or less, 40 nm or less or 35 nm or less, and is more than 23 nm and 80 nm or less, 30 nm or more and 60 nm or less, 30 nm or more and 50 nm or less, 31 nm or more and 50 nm or less, 31 nm or more and 45 nm or less, 32 nm or more and 45 nm or less, 32 nm or more and 45 nm or less or 34 nm or more and 40 nm or less. If the monoclinic fraction is a certain value or less, $D_m$ may decrease. Therefore, $D_m$ is more than 23 nm, 31 nm or more or 32 nm or more or may be 40 nm or less or 35 nm or less. $D_m$ may be more than 23 nm and 40 nm or less, 31 nm or more and 35 nm or less or 32 nm or more and 35 nm or less. For example, $D_m$ is as described above, and the monoclinic fraction is more than 70% and 95% or less.

The crystallite size (Dt) of tetragonal zirconia is preferably 30 nm or more, 35 nm or more or 37 nm or more, is preferably 85 nm or less, 50 nm or less, 40 nm or less or 38 nm or less, and is 30 nm or more and 85 nm or less, 35 nm or more and 40 nm or less or 37 nm or more and 40 nm or less. Unlike $D_m$, the influence of Dt on the monoclinic fraction is small.

In the powder in the present embodiment, the ratio of Dm to Dt (which is hereinafter referred to also as "Dm/Dt") [nm/nm] is 0.7 or more and 1.2 or less, 0.8 or more and 1.0 or less or 0.8 or more and 0.9 or less. In the powder in the present embodiment, when the monoclinic fraction is a certain value or less, the monoclinic fraction is not correlated with Dm/Dt. In this case, Dt is larger than Dm. When the monoclinic fraction is more than or equal to the certain value, Dm/Dt tends to increase as the monoclinic fraction increases. Therefore, for example, when the monoclinic fraction is more than 70% and 95% or less, Dm/Dt is 0.8 or more and 0.9 or less. When the monoclinic fraction is more than 95% and 100% or less, Dm/Dt is more than 0.9 and 1.2 or less, and Dt may be smaller than Dm.

The BET specific surface area of the powder in the present embodiment is preferably 25 m²/g or less, less than 20 m²/g, 18 m²/g or less or 17 m²/g or less and is preferably 6 m²/g or more, 8 m²/g or more, 10 m²/g or more, 12 m²/g or more, more than 13 m²/g, 15 m²/g or more or 16 m²/g or more. When the BET specific surface area is 6 m²/g or more, sintering can easily proceed at relatively low temperature. When the BET specific surface area is 25 m²/g or less, physical aggregation of the powder tends to be suppressed. The BET specific surface area is, for example, 6 m²/g or more and less than 20 m²/g, 8 m²/g or more and 18 m²/g or less, 10 m²/g or more and 17 m²/g or less, 12 m²/g or more and 17 m²/g or less, more than 13 m²/g and 17 m²/g or less or 15 m²/g or more and 17 m²/g or less and may be 6 m²/g or more and 17 m²/g or less, 8 m²/g or more and 15 m²/g or less or 8 m²/g or more and 13 m²/g or less.

It is preferable that the powder in the present embodiment contains zirconia with a monoclinic fraction of more than 70%, that $D_m$ is more than 23 nm and 80 nm or less, and that the BET specific surface area is 25 m²/g or less, and it is more preferable that the powder contains zirconia with a monoclinic fraction of 85% or more and 95% or less, that $D_m$ is 30 nm or more and 50 nm or less, and that the BET specific surface area is more than 13 m²/g and 18 m²/g or less.

The powder in the present embodiment contains a manganese compound serving as a coloring element assuming a black color (which is hereinafter referred to also as a "black coloring agent"). The manganese compound is preferably a powder of the manganese compound. It is only necessary that the manganese compound is a compound containing manganese (Mn), and the manganese compound is preferably an oxide of manganese and is, for example, at least one selected from the group consisting of manganese monoxide (MnO), manganese dioxide ($MnO_2$), trimanganese dioxide ($Mn_2O_3$) and trimanganese tetroxide ($Mn_3O_4$). The manganese compound is preferably at least one selected from the group consisting of manganese monoxide, trimanganese dioxide and trimanganese tetroxide or is preferably trimanganese tetroxide. In the powder in the present embodiment, the content of the manganese compound (hereinafter referred to also as the "manganese content"), which is the ratio of the mass of the manganese compound in terms of $Mn_3O_4$ to the total mass of the powder, is preferably 0.1 % by mass or more and 0.6% by mass or less. If the manganese content is less than 0.1% by mass, the variation in color tone, in particular the variation in lightness L*, among sintered bodies due to different sintering temperatures increases. If the manganese content exceeds 0.6% by mass, the variation in lightness L* increases. If the manganese content further increases, defects such as cracks are likely to occur during sintering. The manganese content is, for example, 0.1% by mass or more, 0.2% by mass or more, 0.3% by mass or more, 0.4% by mass or more or 0.5% by mass or more and is 0.6% by mass or less, 0.5% by mass or less, 0.4% by mass or less, 0.3% by mass or less or 0.2% by mass or less. The manganese content is, for example, 0.1% by mass or more and 0.2% by mass or less, 0.1% by mass or more and 0.3% by mass or less, 0.1% by mass or more and 0.4% by mass or less, 0.1% by mass or more and 0.5% by mass or less, 0.1% by mass or more and 0.6% by mass or less, 0.2% by mass or more and 0.3% by mass or less, 0.2% by mass or more and 0.4% by mass or less, 0.2% by mass or more and 0.5% by mass or less, 0.2% by mass or more and 0.6% by mass or less, 0.3% by mass or more and 0.4% by mass or less, 0.3% by mass or more and 0.5% by mass or less, 0.3% by mass or more and 0.6% by mass or less, 0.4% by mass or more and 0.5% by mass or less, 0.4% by mass or more and 0.6% by mass or less or 0.5% by mass or more and 0.6% by mass or less.

It is only necessary that the powder in the present embodiment contains only the manganese compound serving as a black coloring agent. However, the powder in the present embodiment may contain, in addition to the manganese compound, a black coloring agent other than the manganese compound so long as the effects of the powder are not impaired. This allows the tint to be finely adjusted. The black coloring agent other than manganese oxide is, for example, a compound of at least one element selected from the group consisting of cobalt (Co), chromium (Cr), iron (Fe), titanium (Ti), nickel (Ni) and vanadium (V) or is, for example, a compound of at least one of cobalt and iron. The content of these elements (hereinafter referred to also as "toning coloring agents") is preferably less than the manganese content. The ratio of the mass of the toning coloring agents in terms of their respective oxides to the total mass of the powder is 0% by mass or more or more than 0% by mass, is, for example, 0.3% by mass or less or 0.2% by mass or less, and is, for example, 0% by mass or more and 0.3% by mass or less, more than 0% by mass and 0.3% by mass or less or more than 0% by mass and 0.2% by mass or less.

In the powder in the present embodiment, the "total mass of the powder" is the total mass of rare-earth elements and metal elements contained in the powder in terms of their respective oxides. These elements are converted to their respective oxides as follows. Cobalt (Co) is converted to $Co_3O_4$, and chromium (Cr) is converted to $Cr_2O_3$. Iron (Fe) is converted to $Fe_2O_3$, and titanium (Ti) is converted to $TiO_2$. Nickel (Ni) is converted to NiO, and vanadium (V) is converted to $V_2O_5$. Aluminum (Al) is converted to $Al_2O_3$.

The powder in the present embodiment contains alumina ($Al_2O_3$). The alumina is preferably at least one of an alumina sol and an alumina powder and more preferably an alumina powder. Since the manganese compound is present together with the alumina contained in an amount within a range described later, the color tone variation among sintered bodies may be unlikely to occur even when the firing temperature changes.

The content of alumina (herein after referred to as the "alumina content") in the powder in the present embodiment, which is the ratio of the mass of aluminum in terms of $Al_2O_3$ to the total mass of the powder, is 0.2% by mass or more and 1.5% by mass or less. If the alumina content is less than 0.2% by mass or no alumina is contained, the color tone variation, in particular the variation in lightness L*, due to different sintering temperatures increases. The alumina content is 0.2% by mass or more, 0.25% by mass or more, 0.5% by mass or more, 0.75% by mass or more, 1.0% by mass or more or 1.2% by mass or more and is 1.5% by mass or less, 1.25% by mass or less, 1.0% by mass or less, 0.75% by mass or less or 0.5% by mass or less. The alumina content is, for example, 0.2% by mass or more and 1.5% by mass or less, 0.2% by mass or more and 1.25% by mass or less, 0.2% by mass or more and 1.0% by mass or less, 0.2% by mass or more and 0.75% by mass or less, 0.2% by mass or more and 0.5% by mass or less, 0.25% by mass or more and 1.5% by mass or less, 0.25% by mass or more and 1.25% by mass or less, 0.25% by mass or more and 1.0% by mass or less, 0.25% by mass or more and 0.75% by mass or less, 0.25% by mass or more and 0.5% by mass or less, 0.5% by mass or more and 1.5% by mass or less, 0.5% by mass or more and 1.25% by mass or less, 0.5% by mass or more and 1.0% by mass or less, 0.5% by mass or more and 0.75% by mass or less, 0.75% by mass or more and 1.5% by mass or less, 0.75% by mass or more and 1.25% by mass or less, 0.75% by mass or more and 1.0% by mass or less, 1.0% by mass or more and 1.5% by mass or less, 1.0% by mass or more and 1.25% by mass or less or 1.2% by mass or more and 1.5% by mass or less.

With yttrium-containing zirconia (high-toughness zirconia) with an yttrium content of less than 2 mol%, even when the coloring elements are contained in certain amounts or more, sintered bodies obtained may have no defects, and the color tone variation among the sintered bodies due to different sintering temperatures during sintering may be reduced by limiting the manganese compound content and the alumina content within respective specific ranges. One of the reasons for this is that, in a zirconia sintered body assuming a black color, the influence of lightness L* on the color tone visually observed is larger than the influence of hues a* and b*. Moreover, in the high-toughness zirconia, the manganese compound is present together with alumina. In this case, it is inferred that the reaction of the manganese compound and alumina is induced, that the valence of manganese is stabilized, that the color tone of the sintered body is stabilized, and that the color tone variation is particularly reduced.

In the powder in the present embodiment, the ratio of the mass of alumina in terms of $Al_2O_3$ to the mass of the manganese compound in terms of $Mn_3O_4$ (the ratio is hereinafter referred to also as the "Al/Mn ratio") is preferably 0.1 or more, 0.4 or more or 0.7 or more and is preferably 5.0 or less, 3.0 or less, 2.5 or less or 1.5 or less because the variation in lightness L* among sintered bodies sintered at sintering temperatures of 1200°C to 1400°C is unlikely to increase. The Al/Mn ratio of the powder in the present embodiment is, for example, 0.1 or more and 5.0 or less, 0.4 or more and 3.0 or less or 0.4 or more and 1.5 or less.

The powder in the present embodiment may contain a binder for improving flowability. In this case, the powder in the present embodiment may be regarded as a powder composition containing the powder and the binder. The binder contained in the powder composition may be any well-known binder used for ceramic compositions, and examples thereof include thermoplastic resins. The binder is preferably at least one selected from the group consisting of acrylic resins, polystyrenes and polyalkyl carbonates and more preferably an acrylic resin (such as at least one selected from the group consisting of AS-1100, AS-1800 and AS-2000 each manufactured by TOAGOSEI Co., Ltd.).

The powder composition may contain components such as a wax as additives in addition to the binder. When these components are contained, additional effects such as an improvement in releasability from a forming mold (metal mold) are obtained. The components such as a wax are, for example, one or more selected from the group consisting of polyethylenes, polypropylenes, polyacrylonitriles, acrylonitrile-styrene copolymers, ethylene-vinyl acetate copolymers, styrene-butadiene copolymers, polyacetal resins, petroleum-based waxes, synthesized waxes, plant-based waxes, stearic acid, phthalate-based plasticizers and adipates.

When the powder in the present embodiment contains the binder, the wax etc. (hereinafter referred to "the binder etc."), the ratio of the mass of the powder to the mass of the powder composition (= the total mass of the powder and the binder etc.) is, for example, 50% by mass or more and 97% by mass or less, 70% by mass or more and 95% by mass or less or 80% by mass or more and 90% by mass or less. The content of the powder in the powder composition may be determined from the ratio of the mass of the powder composition from which the binder etc. have been removed to the mass of the powder composition. Any method may be used to remove the binder etc. Examples of the method include heat treatment in an air atmosphere at 200°C or higher and 500°C or lower.

Preferably, the powder in the present embodiment contains no impurities. However, the zirconia may contain unavoidable impurities such as hafnia ($HfO_2$). When values relating to the chemical composition such as the contents and density are computed, hafnia is regarded as zirconia.

When the powder in the present embodiment is an yttrium-containing zirconia powder containing alumina, the manganese compound and the binder, the chemical composition of the powder may be determined as follows.

Total mass of powder: $Al_2O_3 + Mn_3O_4 + Y_2O_3 + ZrO_2$ [g]
Alumina content:

$$\{Al_2O_3 / (Al_2O_3 + Mn_3O_4 + Y_2O_3 + ZrO_2)\} \times 100 \text{ [\% by mass]}$$

Manganese content:

$$\{Mn_3O_4 / (Al_2O_3 + Mn_3O_4 + Y_2O_3 + ZrO_2)\} \times 100 \text{ [\% by mass]}$$

Zirconia (yttrium-containing zirconia) content:

$$\{(Y_2O_3 + ZrO_2) / (Al_2O_3 + Mn_3O_4 + Y_2O_3 + ZrO_2)\} \times 100 \text{ [\% by mass]}$$

Stabilizing element content (yttrium content):

$$\{Y_2O_3 / (Y_2O_3 + ZrO_2)\} \times 100 \text{ [mol\%]}$$

The binder content may be determined from

$$\{(W2 - W1) / W2\} \times 100 \text{ [\% by mass]}$$

(wherein W1 is the mass of the powder heat-treated in an air atmosphere at 200°C or higher and 500°C or lower for 2 hours, and W2 is the mass of the powder before the treatment). When the binder is contained, the chemical composition of the powder in the present embodiment (the total mass of the powder and the binder) may be different from 100% by mass because different mass computation methods are used.

In the powder in the present embodiment, the median size (D50) is 0.1 μm or more, 0.2 μm or more, 0.3 μm or more or 0.4 μm or more and is 1.0 μm or less, 0.7 μm or less, 0.55 μm or less, 0.5 μm or less or 0.45 μm or less. D50 is, for example, 0.1 μm or more and 1.0 μm or less, 0.1 μm or more and 0.7 μm or less, 0.2 μm or more and 0.55 μm or less, 0.2 μm or more and 0.5 μm or less, 0.2 μm or more and 0.45 μm or less, 0.3 μm or more and 0.45 μm or less, 0.4 μm or more and 0.55 μm or less or 0.4 μm or more and 0.5 μm or less.

The volumetric particle size distribution curve of the powder in the present embodiment is, for example, a multimodal distribution, preferably a bimodal distribution, more preferably a volumetric particle size distribution curve having peaks at least at a particle size of 0.05 μm or more and 0.2 μm or less and a particle size of more than 0.2 μm and 0.5 μm or less and still more preferably a distribution having peaks (extremes) at least at a particle size of 0.05 μm or more and 0.2 μm or less and a particle size of 0.3 μm or more and 0.5 μm or less.

Preferably, the formability of the powder in the present embodiment is high. The relative density of a green body obtained by subjecting the powder to uniaxial compression molding at a pressure of 70 ± 5 MPa and then to cold isostatic pressing (hereinafter referred to also as "CIP") at a pressure of 196 ± 5 MPa (this relative density is hereinafter referred to also as the "green body density") is preferably 49% or more and 56% or less or 50% or more and 54% or less.

Preferably, the color tone variation among sintered bodies obtained by sintering the powder in the present embodiment is small. For example, a procedure including charging a mold having a diameter of 25 mm with 3 ± 0.3 g of the powder in the present embodiment and subjecting the powder to uniaxial compression molding at a pressure of 70 ± 5 MPa and CIP processing at a pressure of 196 $\pm$ 5 MPa is repeated to produce five green bodies (green compacts). Then the five green bodies are subjected to pressureless sintering at respective sintering temperatures of 1200°C, 1250°C, 1300°C, 1350°C and 1400°C in an air atmosphere at a heating rate of 100°C/hour for a holding time at the respective sintering temperatures of 2 hours to thereby obtain five sintered bodies. It is preferable that the difference between the maximum and minimum lightness L* values of the five sintered bodies (the difference is hereinafter referred to as the "variation in L*") is 1.4 or less, 1.0 or less, 0.8 or less or 0.5 or less. It is preferable that the variation in L* is small, and the variation in L* is 0 or more, more than 0 or 0.2 or more and is, for example, 0 or more and 1.4 or less, more than 0 and 0.8 or less or 0.2 or more and 0.5 or less.

The difference between the maximum and minimum chroma C* values of sintered bodies produced under the same conditions as above (the difference is hereinafter referred to as the "variation in C*") is preferably 0.40 or less, 0.35 or less or 0.33 or less. In zirconia sintered bodies assuming a jet black color, the influence of the variation in C* on the visually observed color tone is smaller than the influence of the variation in L*. However, from the viewpoint of the stability of quality, it is preferable that the variation in C* is small. The variation in C* is 0 or more, 0.15 or more or 0.25 or more and is, for example, 0 or more and 0.40 or less, 0.15 or more and 0.35 or less or 0.25 or more and 0.33 or less.

The powder in the present embodiment can be used for a zirconia calcined body and a precursor of a sintered body and is suitable as a raw material powder for structural materials for grinder members, precision machine components, optical connector components etc., biomaterials such as dental materials and exterior materials for decorative members and exterior components of electronic devices.

[Method for producing powder]

No particular limitation is imposed on the method for producing the powder in the present embodiment so long as the powder has the features described above. A preferred production method is a powder production method including mixing an alumina source, a manganese compound source and an yttrium-containing zirconia powder containing yttrium in an amount of 1.3 mol% or more and less than 2.0 mol% in terms of $Y_2O_3$ based on the total amount of zirconia and yttrium in terms of $Y_2O_3$. The production method includes the step of mixing them such that the content of the alumina is 0.2% by mass or more and 1.5% by mass or less based on the total mass of the powder and that the content of the manganese compound is 0.1% by mass or more and 0.6% by mass or less based on the total mass of the powder.

The yttrium-containing zirconia powder, the alumina source and the manganese compound source used in the above step (hereinafter referred to also as the "mixing step") may be the same as the yttrium-containing zirconia, the alumina and the manganese compound, respectively, contained in the powder in the present embodiment.

In the mixing step, the yttrium-containing zirconia powder containing yttrium in an amount of 1.3 mol% or more and less than 2.0 mol% in terms of $Y_2O_3$ based on the total mass of the zirconia and the yttrium in terms of $Y_2O_3$ is added.

The BET specific surface area of the yttrium-containing zirconia powder is preferably 6 $m^2/g$ or more, 8 $m^2/g$ or more or 10 $m^2/g$ or more and is preferably 25 $m^2/g$ or less, less than 20 $m^2/g$, 18 $m^2/g$ or less, 17 $m^2/g$ or less or 15 $m^2/g$ or less. The range of the BET specific surface area of the yttrium-containing zirconia powder may be, for example, 6 $m^2/g$ or more and 25 $m^2/g$ or less, 8 $m^2/g$ or more and 18 $m^2/g$ or less, 10 $m^2/g$ or more and 17 $m^2/g$ or less, 12 $m^2/g$ or more and 17 $m^2/g$ or less or more than 13 $m^2/g$ and 17 $m^2/g$ or less and may be 6 $m^2/g$ or more and 18 $m^2/g$ or less, 6 $m^2/g$ or more and 15 $m^2/g$ or less or 6 $m^2/g$ or more and 13 $m^2/g$ or less. The BET specific surface area of the yttrium-containing zirconia powder is influenced by the heat treatment temperature (calcination temperature) during production. As the heat treatment temperature increases, the BET specific surface area tends to decrease.

The average particle size (D50) of the yttrium-containing zirconia powder used in the mixing step is preferably 0.1 $\mu$m or more and 1.0 $\mu$m or less and more preferably 0.1 $\mu$m or more and 0.7 $\mu$m or less, 0.2 $\mu$m or more and 0.5 $\mu$m or less, 0.2 $\mu$m or more and 0.45 $\mu$m or less or 0.3 $\mu$m or more and 0.45 $\mu$m or less.

The monoclinic crystallite size of the yttrium-containing zirconia powder is preferably more than 23 nm and 80 nm or less, 30 nm or more and 60 nm or less, 30 nm or more and 50 nm or less, 31 nm or more and 50 nm or less or 32 nm or more and 45 nm or less.

The yttrium-containing zirconia powder may be a powder obtained by any production method and is preferably a zirconia powder obtained, for example, by at least one method selected from the group consisting of a hydrolysis method, a hydrothermal synthesis method and a coprecipitation method and preferably a zirconia powder obtained by a hydrolysis method. The zirconia powder is particularly preferably a zirconia powder obtained by hydrolyzing a zirconia sol having an average sol particle size of 150 nm or more and 400 nm or less, preferably 180 nm or more and 400 nm or less and more preferably 185 nm or more and 300 nm or less.

The manganese compound source is preferably at least one of an oxide of manganese and a manganese compound serving as a precursor of the oxide of manganese and is, for example, at least one selected from the group consisting of manganese monoxide, manganese dioxide, trimanganese dioxide, trimanganese tetroxide, manganese hydroxide, manganese oxyhydroxide, manganese chloride and manganese acetate, preferably at least one selected from the group consisting of manganese monoxide, trimanganese dioxide and trimanganese tetroxide and more preferably trimanganese tetroxide. The manganese compound source is preferably a powder of the manganese compound.

The content of the manganese compound source can be represented by the ratio (% by mass) of the mass of the manganese compound source in terms of $Mn_3O_4$ to the total mass of the yttrium-containing zirconia powder, the manganese compound source in terms of $Mn_3O_4$ and the alumina source in terms of $Al_2O_3$ after mixing. The content of the manganese compound source is preferably 0.1% by mass or more and 0.6% by mass or less, 0.2% by mass or more and 0.5% by mass or less or 0.3% by mass or more and 0.5% by mass or less.

The alumina source is at least one of alumina and an aluminum compound serving as a precursor of alumina and is, for example, at least one selected from the group consisting of alumina, aluminum hydroxide, aluminum nitrate and aluminum chloride, preferably alumina and more preferably at least one of an alumina sol and an alumina powder. The alumina source is preferably at least one of an aluminum compound sol and an aluminum compound powder, preferably an aluminum compound sol and still more preferably an alumina sol. The particle size of the alumina sol is smaller than that of the alumina powder, and the specific surface area of the alumina sol is larger than that of the alumina powder. Therefore, when the alumina source is the alumina sol, the BET specific surface area of the powder obtained tends to increase as the content of the alumina source increases.

The content of the alumina source can be represented by the ratio (% by mass) of the mass of the alumina source to the total mass of the yttrium-containing zirconia powder, the manganese compound source in terms of $Mn_3O_4$ and the alumina source in terms of $Al_2O_3$ after mixing. For example, the content of the alumina source is preferably 0.2% by mass or more and 1.5% by mass or less, 0.2% by mass or more and 1.25% by mass or less or 0.25% by mass or more and 1.0% by mass or less.

In the mixing step, the yttrium-containing zirconia powder, the manganese compound source and the alumina source are mixed such that the target powder chemical composition is obtained.

The mixing method in the mixing step may be at least one of wet mixing and dry mixing and is preferably wet mixing. Specifically, for example, at least one selected from the group consisting of a ball mil, a vibrating mill and a continuous media mixing mill is used for the wet mixing, and a ball mill is preferred. The mixing using the ball mill is performed, for example, under the following conditions. The yttrium-containing zirconia powder, the alumina source and the manganese compound source are mixed with a solvent to prepare a slurry in which the ratio of the mass of the powders to the mass of the slurry is 30% by mass or more and 60% by mass or less, and the slurry is subjected to grinding-mixing treatment using zirconia balls having a diameter of 1 mm or more and 15 mm or less as a grinding medium. Yttrium-containing zirconia with a low yttrium content is likely to be chipped or cracked during sintering. However, by performing mixing using the grinding-mixing treatment described above, the yield of sintering is likely to increase, and the sintered body obtained tends not to undergo hydrothermal degradation. The treatment time may be appropriately changed according to the amount of the powders to be subjected to grinding and the grinding conditions. As the grinding-mixing time increases, the BET specific surface area tends to increase until equilibrium is reached, and the average particle size tends to decrease until equilibrium is reached. The mixing time is, for example, 1 hour or longer and 100 hours or shorter or 10 hours or longer and 50 hours or shorter and may be 1 hour or longer and 10 hours or shorter or 1 hour or longer and 5 hours of shorter.

The mixed powder may be optionally dried by any method. The drying may be performed, for example, under the conditions of 110°C or higher and 130°C or lower in an air atmosphere.

To improve the handleability (ease of handling) of the powder, the powder production method in the present embodiment may include the step of granulating the powder (this step is referred to also as a "granulating step"). The granulation is treatment for aggregating the powder particles to form aggregated particles. Any method may be used for the granulation, and a method may be used in which a slurry obtained by mixing the powder and a solvent is subjected to spray granulation. The solvent is at least one of water and alcohol and is preferably water. The average granule size of the granulated powder (hereinafter referred to also as powder granules) is 30 $\mu$m or more and 90 $\mu$m or less or 40 $\mu$m or more and 60 $\mu$m or less, and its bulk density is 1.00 g/$cm^3$ or more and 1.40 g/$cm^3$ or less or 1.10 g/$cm^3$ or more and 1.30 g/$cm^3$ or less.

[Method for producing sintered body]

After the powder in the present embodiment is molded into a shape, the resulting powder is calcined or sintered by a well-known method, and a calcined body or a sintered body is thereby obtained. For example, a sintered body may be produced by a sintered body production method including the step of subjecting the powder in the present embodiment to pressureless sintering at a temperature of 1200°C or higher and 1400°C or lower, by a sintered body production method including a sintering step of sintering a green body containing the powder in the present embodiment or by a sintered body production method including a molding step of molding the powder in the present embodiment to obtain a green body and a firing step of firing the green body. The sintered body production method is preferably a sintered body production method including a sintering step of subjecting a green body containing the powder in the present embodiment to pressureless sintering at a temperature of 1200°C or higher and 1400°C or lower. This production method may include, before the sintering, a calcining step of calcining the green body to obtain a calcined body. In this case, the calcined body may be used instead of the green body for the sintering step (the green body or the calcined body is hereinafter referred to also as the "green body etc.").

<Molding step>

When the powder in the present embodiment is molded into a green body, any well-known method, e.g., one or more selected from the group consisting of uniaxial pressing, cold isostatic pressing, slip casting and injection molding, may be used for the molding. When, for example, a powder composition using a resin is molded, the green body obtained may be optionally subjected to heat treatment to remove the resin. The heating conditions are, for example, 400°C or higher and lower than 800°C in an air atmosphere.

In the present embodiment, the green body is a composition having a certain shape and formed of powder particles aggregated by physical force and is in particular a composition not subjected to heat treatment after having been formed into the shape (e.g., after molding). The term "green body" can be used interchangeably with the term "green compact."

The main chemical composition of the green body obtained through the molding step, i.e., the zirconia containing yttrium as a stabilizing element, the manganese compound and alumina, is unchanged before and after the molding and is the same as the chemical composition of the powder in the present embodiment. Therefore, the green body obtained is a green body containing zirconia containing yttrium as a stabilizing element, the manganese compound and alumina. In this green body, the content of the stabilizing element in terms of oxide is 1.3 mol% or more and less than 2.0 mol% based on the total amount of the zirconia and the stabilizing element in terms of oxide, and the content of the alumina is 0.2% by mass or more and 1.5% by mass or less based on the total mass of the green body. Moreover, the content of the manganese compound is 0.1% by mass or more and 0.6% by mass or less based on the total mass of the green body.

<Calcining step>

The green body may be optionally calcined. The calcination may be performed as heat treatment at a temperature lower than the temperature at which densification proceeds by sintering of the powder. The calcining method in the calcining step includes, for example, a heat treatment step of subjecting a green body containing the powder in the present embodiment to heat treatment in an air atmosphere at 800°C or higher and lower than 1200°C. A calcined body is thereby obtained.

In the present embodiment, the calcined body is a composition having a certain shape and formed of fused particles and is a composition heat-treated at a temperature lower than the sintering temperature.

The main chemical composition of the calcined body obtained through the calcining step, i.e., the zirconia containing yttrium as a stabilizing element, the manganese compound and alumina, is unchanged before and after the calcination and is the same as that of the powder in the present embodiment and that of the green body. Therefore, the calcined body obtained is a green body containing the zirconia containing yttrium as a stabilizing element, the manganese compound and alumina, and the content of the stabilizing element in terms of oxide is 1.3 mol% or more and less than 2.0 mol% based on the total amount of the zirconia and the stabilizing element in terms of oxide. The content of the alumina is 0.2% by mass or more and 1.5% by mass or less based on the total mass of the calcined body, and the content of the manganese compound is 0.1% by mass or more and 0.6% by mass or less based on the total mass of the calcined body.

<Sintering step>

In the sintering step, the green body etc. is sintered. A well-known method such as at least one selected from the group consisting of pressure sintering, vacuum sintering and pressureless sintering can be used for the sintering. The sintering is preferably pressureless sintering. The sintering atmosphere is preferably an oxidizing atmosphere and more preferably an air atmosphere. In a preferred sintering method, pressureless sintering is performed, for example, in an air atmosphere at a temperature of 1200°C or higher and 1550°C or lower, preferably 1200°C or higher and 1500°C or lower and more preferably 1200°C or higher and 1400°C or lower. It is preferable that sintering other than the pressureless sintering is not performed in the sintering step, and it is also preferable that the step of performing pressure sintering is not included. The sintering time may be appropriately set according to the amount and size of the green body to be sintered and the characteristics of the sintering furnace and is, for example, 0.5 hours or longer and 5 hours or shorter or 1 hour or longer and 4 hours or shorter. The "pressureless sintering" in the present embodiment is a method in which a sintering target (such as a green body) is heated at a temperature higher than or equal to a temperature at which densification due to sintering proceeds while no external force is applied to thereby sinter the sintering target.

The sintering conditions in the sintering step include the following conditions.

Sintering method: pressureless sintering
Sintering temperature: 1200°C or higher and 1400°C or lower
Sintering time: 1 hour or longer and 5 hours or shorter
Heating rate: 80°C/hour or more and 120°C/hour or less
Sintering atmosphere: oxidizing atmosphere and preferably an air atmosphere

The following conditions may also be used.

Sintering method: pressureless sintering
Sintering temperature: 1200°C, 1250°C, 1300°C, 1350°C or 1400°C
Sintering time: 2 hours
Heating rate: 100°C/hour
Sintering atmosphere: air atmosphere

[Sintered body]

The sintered body in the present embodiment is a sintered body containing manganese and alumina and composed of yttrium-containing zirconia containing yttrium in an amount of less than 2 mol% and is a zirconia sintered body containing manganese and alumina and further containing, as a main phase, yttrium-containing zirconia containing yttrium in an amount of less than 2 mol%. The sintered body in the present embodiment is a sintered body assuming a black color, i.e., a so-called black sintered body (black zirconia sintered body).

Preferably, in the sintered body in the present embodiment, the yttrium is dissolved in the zirconia to form a solid solution. More preferably, the sintered body contains no undissolved yttrium, and all the yttrium is dissolved in the zirconia to form a solid solution. In the present embodiment, when XRD peaks of yttrium and yttrium compounds are not observed, it may be considered that no undissolved yttrium is contained.

In the sintered body in the present embodiment, the monoclinic fraction is preferably 0.5% or more, 0.5% or more, 1% or more, 2% or more, 5% or more or 7% or more and is preferably 15% or less, 14% or less, 12% or less, 11% or less or 10% or less. The monoclinic fraction is more preferably 0.5% or more and 15% or less or 0.8% or more and 12% or less. The monoclinic fraction is preferably 1% or more and 15% or less, 2% or more and 14% or less, 5% or more and 12% or less or 7% or more and 11% or less because the fracture toughness tends to increase. The monoclinic fraction is preferably 0.5% or more and 11% or less or 0.8% or more and 10% or less because the bending strength tends to increase.

The surface of the sintered body immediately after the sintering (the as-sintered-surface, which may be hereinafter referred to also as the "sintered surface") is rough and includes many fracture origins such as irregularities. To prevent fracture of the sintered body, it is preferable that the sintered surface of the sintered body is removed by machining such as grinding before evaluation or use in various applications and the resulting sintered body is polished such that a mirror-finished surface (polished-surface, which is hereinafter referred to as a "mirror surface") appears. The mirror surface is a smooth surface and is, for example, a surface with $Ra \leq 0.04\ \mu m$. The monoclinic fraction is a value on the mirror surface of the sintered body. Preferably, the sintered body in the present embodiment includes monoclinic zirconia such that the monoclinic fraction on the mirror surface satisfies the above conditions. In this case, the sintered body in the present embodiment can be a sintered body including monoclinic zirconia over the entire body or can be a sintered body including tetragonal zirconia that can easily transform into monoclinic zirconia.

In the sintered body in the present embodiment, the zirconia includes at least one of monoclinic zirconia, tetragonal zirconia and cubic zirconia and is preferably composed of monoclinic zirconia and tetragonal zirconia.

The monoclinic zirconia contained in the sintered body in the present embodiment is preferably monoclinic zirconia having at least an XRD peak corresponding to the monoclinic zirconia (111) plane in the XRD pattern. When a sintered body that has not been subjected to degradation treatment contains the above-described monoclinic zirconia, the sintered body tends to exhibit a high fracture toughness value and tends to have resistance to hydrothermal degradation. When monoclinic zirconia is formed due to degradation of the sintered body, the intensity of an XRD peak corresponding mainly to the monoclinic zirconia (11-1) plane in the XRD pattern increases. It is preferable that the monoclinic zirconia contained in the sintered body in the present embodiment has an XRD peak corresponding to at least the monoclinic zirconia (111) plane in the XRD pattern. The monoclinic intensity ratio of the sintered body in the present embodiment is preferably 0 or more, 0.3 or more, 0.4 or more, 0.5 or more or 1.0 or more. The monoclinic intensity ratio is 10 or less, 8 or less, 5 or less, 3 or less, 1.5 or less, 1.2 or less or 1.0 or less and is, for example, 0 or more and 10 or less, 0.5 or more and 3 or less or 1.0 or more and 1.5 or less. The monoclinic intensity ratio can be determined using formula (3). Therefore, when $I_m(111)$ is zero, i.e., in a sintered body having no XRD peak corresponding to the monoclinic zirconia (111) plane, the monoclinic intensity ratio is infinite and cannot be determined. Specifically, it is preferable that the sintered body in the present embodiment includes no sintered body with an infinite monoclinic intensity ratio.

The relative density of the sintered body in the present embodiment (which is hereinafter referred to also as the "sintered body density") is, for example, 98% or more, 98.4% or more or 99% or more and is preferably 98% or more and 100% or less, 98.4% or more and 100% or less or 99% or more and 100% or less.

The sintered body in the present embodiment is preferably a sintered body obtained by pressureless sintering (a so-called pressureless sintered body) and more preferably a sintered body obtain by pressureless sintering in an air atmosphere. It is preferable that the sintered body is not subjected to any sintering treatment other than pressureless sintering, and it is more preferable that the sintered body is not subjected to any sintering treatment after the pressureless sintering. The sintering treatment other than the pressureless sintering is, for example, at least one selected from the group consisting of pressure sintering, vacuum sintering and microwave sintering.

In the sintered body in the present embodiment, the fracture toughness value (the fracture toughness value measured by a method according to the SEPB method specified in JIS R1607) is, for example, 6 MPa·m$^{0.5}$ or more and 12 MPa·m$^{0.5}$ or less and is 6.2 MPa·m$^{0.5}$ or more, 7 MPa·m$^{0.5}$ or more, 7.7 MPa·m$^{0.5}$ or more or 8 MPa·m$^{0.5}$ or more. The higher the fracture toughness value, the better. However, the fracture toughness value is, for example, 12 MPa·m$^{0.5}$ or less, 11.5 MPa·m$^{0.5}$ or less, 10.5 MPa·m$^{0.5}$ or less, 10.0 MPa·m$^{0.5}$ or less or 9.5 MPa·m$^{0.5}$ or less. These upper and lower limits may be combined freely, and the fracture toughness value is, for example, 6 MPa·m$^{0.5}$ or more and 12 MPa·m$^{0.5}$ or less, 6 MPa·m$^{0.5}$ or more and 11.5 MPa·m$^{0.5}$ or less, 6.2 MPa·m$^{0.5}$ or more and 12 MPa·m$^{0.5}$ or less, 6.2 MPa·m$^{0.5}$ or more and 11.5 MPa·m$^{0.5}$ or less, 7 MPa·m$^{0.5}$ or more and 12 MPa·m$^{0.5}$ or less, 7 MPa·m$^{0.5}$ or more and 11.5 MPa·m$^{0.5}$ or less, 8 MPa·m$^{0.5}$ or more and 12 MPa·m$^{0.5}$ or less, 7.7 MPa·m$^{0.5}$ or more and 12 MPa·m$^{0.5}$ or less or 7.7 MPa·m$^{0.5}$ or more and 11.5 MPa·m$^{0.5}$ or less. When the fracture toughness value is as described above, the sintered body can be easily machined into, for example, a sintered body having a thickness of 1 mm or less or a sintered body having a thickness of 0.5 mm or less. Therefore, the sintered body in the present embodiment can be formed, for example, as a sintered body having a thickness of 0.05 mm or more and 0.3 mm or less or a sintered body having a thickness of 0.08 mm or more and 0.25 mm or less.

The bending strength of the sintered body in the present embodiment is preferably 900 MPa or more, 1000 MPa or more, 1100 MPa or more or 1200 MPa or more and is preferably 1550 MPa or less, 1500 MPa or less, 1460 MPa or less or 1400 MPa or less. The bending strength is, for example, 900 MPa or more and 1550 MPa or less, 1000 MPa or more and 1500 MPa or less, 1000 MPa or more and 1500 MPa or less, 1100 MPa or more and 1460 MPa or less or 1200 MPa or more and 1400 MPa or less.

It is preferable that the tetragonal zirconia contained in the sintered body in the present embodiment is unlikely to transform into monoclinic zirconia by hydrothermal treatment (this is hereinafter referred to also as "hydrothermal degradation"), and it is also preferable that the ratio of the tetragonal fraction after immersion treatment in hot water at 134°C for 5 hours to the tetragonal fraction before the immersion treatment in hot water at 134°C for 5 hours (this ratio is hereinafter referred to also as the "residual tetragonal fraction" or "ΔT%") is 15% or more, 70% or more or 80% or more. When the tetragonal zirconia does not transform into monoclinic zirconia during immersion treatment in hot water at 134°C for 5 hours, the residual tetragonal fraction is 100%. Therefore, in the sintered body in the present embodiment, the residual tetragonal fraction is 100% or less, is 95% or less or 90% or less, and is 15% or more and 95% or less or 80% or more and 90% or less.

As the manganese content or the alumina content increases, the hydrothermal degradation tends to be suppressed. Since the sintered body in the present embodiment contains manganese and alumina, the residual tetragonal fraction is, for example, 15% or more and 100% or less, 20% or more and 100% or less, 50% or more and 100% or less, 65% or more and 100% or less, 70% or more and 95% or less or 80% or more and 95% or less.

The sintered body in the present embodiment assumes a black color. When the color tone is represented using the L*a*b* color system, the lightness L* is preferably 40 or more and 50 or less, 42 or more and 48 or less or 44 or more and 48 or less. The hue a* is preferably -1.5 or more and 1.5 or less, more preferably -1.0 or more and 1.5 or less and still more preferably 0 or more and 1.0 or less, and the hue b* is preferably -1.5 or more and 1.5 or less, more preferably -1.5 or more and 1.0 or less and still more preferably -1.0 or more and 0.5 or less.

The color tone variation due to different sintering temperatures that is represented by the difference between the maximum and minimum L* values (the variation in L*) is preferably 1.4 or less, 1.0 or less, 0.8 or less or 0.5 or less. It is preferable that the variation in L* is small. The variation in L* is 0 or more, more than 0 or 0.2 or more and is, for example, 0 or more and 1.4 or less, more than 0 and 0.8 or less or 0.2 or more and 0.5 or less.

The chroma C* can be determined from the following formula.

$$C^* = \{(a^*)^2 + (b^*)^2\}^{0.5}$$

In the sintered body in the present embodiment, the chroma C* is more preferably 0 or more and 1.5 or less, 0 or more and 1.2 or less or 0 or more and 1.0 or less. The variation in chroma due to different sintering temperatures is represented by the difference between the maximum and minimum C* values (the variation in C*) and is preferably 0.4 or less, 0.35 or less or 0.33 or less. In black sintered bodies, the influence of the variation in C* on the visually observed color tone is smaller than that of the variation in L*. However, the variation in C* is preferably small and is, for example, 0 or more or 0.2 or more.

The variation in C* and the variation in L* are each a variation when the difference in the sintering temperature is $\pm 200°C$.

EXAMPLES

The present disclosure will next be described in more detail based on Examples. However, the present disclosure is not to be construed as limited to the following Examples.

(Monoclinic fraction, tetragonal fraction, $D_t$ and $D_m$)

A standard X ray diffractometer (product name: Ultima IV manufactured by Rigaku Corporation) was used to obtain an XRD pattern of a powder sample. The XRD measurement conditions are as follows.

Radiation source: CuKα line ($\lambda$ = 0.15418 nm)
Measurement mode: continuous scanning
Scanning speed: 4°/minute
Step width: 0.02°
Measurement range: $2\theta = 26°$ to 33°

The obtained XRD pattern was used to determine the monoclinic fraction, the tetragonal fraction, $D_t$ and $D_m$ using formulas (1) to (4) described above.

(BET specific surface area)

A standard specific surface area automatic measurement device (device name: TriStar 330011 manufactured by Shimadzu Corporation) with nitrogen as adsorption gas was used to measure the BET specific surface area of a powder sample by a multi-point method according to JIS R 1626-1996. Before the measurement, the powder sample was pretreated by subjecting it to degassing treatment at 250°C for 30 minutes.

(Measurement of particle size distribution)

The volumetric particle size distribution curve of a powder sample was determined using an HRA mode of a Microtrac particle size distribution meter (product name: MT3000 EXII manufactured by MicrotracBEL), and the median size (D50) was measured from the volumetric particle size distribution curve. Before the measurement, the powder sample was pretreated by suspending and dispersing it in pure water for 3 minutes using an ultrasonic homogenizer. The measurement conditions are as follows.

Light source: semiconductor laser (wavelength: 780 nm)
Voltage: 3 mW
Refractive index of zirconia: :2.17
Refractive index of solvent (water): 1.33

(Density of sintered body)

The density of a sintered body sample was measured by the Archimedes method. Before the measurement, the mass of the dried sintered body was measured, and the sintered body was placed in water. Then the sintered body was pretreated by boiling the water for 1 hour. The true density was determined from formulas (6) to (9) described above, and the relative density (%) used as the sintered body density was determined from the ratio of the measured density ($\rho$) to the true density ($\rho_0$).

(Fracture toughness value)

The fracture toughness value of a sintered body sample was measured by a method according to the SEPB method specified in JIS R1607.

(Bending strength)

The bending strength of a sintered body sample was measured by a three-point test according to JIS R1601. In the measurement, columnar sintered body samples with a width of 4 mm and a thickness of 3 mm were used with a span of 30 mm, and the average of ten measurements was used as the bending strength.

(Color tone)

The color tone of a sintered body sample was measured using a spectrophotometer (device name: CM-700d, manufactured by KONICA MINOLTA, INC.) under the following conditions.

Light source: F2 light source
Viewing angle: 10°
Measurement method: SCI
Background: black background
Measurement sample: (sample thickness) $1.3 \pm 0.1$ mm

The color tone variation is represented by the difference between the maximum and minimum L* values (the variation in L*) of sintered bodies obtained at different sintering temperatures.

The chroma C* was determined from the following formula based on the hue a* and hue b* obtained in the above measurement.

$$C^* = \{(a^*)^2 + (b^*)^2\}^{0.5}$$

The variation in chroma is represented by the difference between the maximum and minimum C* values (the variation in C*) of the sintered bodies obtained at different sintering temperatures.

Example 1

Yttrium chloride hexahydrate and an aqueous ammonia solution were added to an aqueous hydrous zirconia sol solution such that the yttrium content was 1.6 mol% to thereby obtain a precipitate. The obtained precipitate was washed with pure water, dried in an air atmosphere, and then calcined in an air atmosphere at a calcination temperature of 1000°C for 2 hours to obtain an yttrium-containing zirconia powder with an yttrium content of 1.6 mol%. The BET specific surface area of the obtained powder was 13.5 $m^2$/g.

The obtained powder was mixed into pure water to prepare a slurry. Then an alumina sol and a $Mn_3O_4$ powder (BROWNOX (registered trademark) manufactured by TOSOH Corporation) were added such that the alumina content and the manganese content in terms of $Mn_3O_4$ were 0.25% by mass and 0.44% by mass, respectively, based on the total mass (100% by mass) of the yttrium-containing zirconia powder, the alumina sol and the $Mn_3O_4$ powder to thereby obtain a slurry mixture. The slurry mixture (the content of the powder: 200 g) was treated in a ball mill using zirconia balls with a diameter of 2 mm and dried in an air atmosphere at 120°C to thereby obtain an yttrium-containing zirconia powder having an alumina content of 0.25% by mass and a manganese content of 0.44% by mass, containing alumina and trimanganese tetroxide, and having an yttrium content of 1.6 mol%. The resulting powder was used as a powder in the present Example. In the powder in the present Example, all the yttrium was dissolved in the zirconia to form a solid solution, and the crystal phases of the zirconia were monoclinic zirconia and tetragonal zirconia. The monoclinic fraction was 89.3%, and the tetragonal fraction was 10.7%. In the powder in the present Example, the crystallite size of the monoclinic zirconia (Dm) was 32.7 nm, and the crystallite size of the tetragonal zirconia (Dt) was 37.1 nm. Dm/Dt was 0.88 [nm/nm], and D50 was 0.44 $\mu$m. The BET specific surface area was 15.6 $m^2$/g.

In the powder in the present Example, the particle size distribution was a bimodal particle size distribution having peaks at a particle size of 0.15 $\mu$m and a particle size of 0.45 $\mu$m.

(Molding step)

Molds with a diameter of 25 mm were each charged with 3 g of the powder in the present Example. Then uniaxial compression molding was performed at a pressure of 70 MPa, followed by CIP treatment at a pressure of 196 MPa, and green bodies (green compacts) were thereby obtained.

(Sintering step)

The obtained green bodies were sintered under the following conditions to obtain sintered bodies.

Sintering method: pressureless sintering
Sintering temperature: 1200°C, 1250°C, 1300°C, 1350°C or 1400°C
Sintering time: 2 hours
Heating rate: 100°C/hour
Sintering atmosphere: air atmosphere

Example 2

A powder and sintered bodies were obtained using the same procedure as in Example 1 except that the amount of the alumina sol added was changed to 0.5% by mass. In the powder in the present Example, all the yttrium was dissolved in the zirconia to form a solid solution, and the crystal phases of the zirconia were monoclinic zirconia and tetragonal zirconia. The monoclinic fraction was 86.4%, and the tetragonal fraction was 13.6%. In the powder, the crystallite size of the monoclinic zirconia (Dm) was 33.5 nm, and the crystallite size of the tetragonal zirconia (Dt) was 37.5 nm. Dm/Dt was 0.89 [nm/nm], and D50 was 0.43 $\mu$m. The BET specific surface area was 16.1 m$^2$/g.
In the powder in the present Example, the particle size distribution was a bimodal particle size distribution having peaks at a particle size of 0.15 $\mu$m and a particle size of 0.45 $\mu$m.

Example 3

A powder and sintered bodies were obtained using the same procedure as in Example 1 except that the amount of the alumina sol added was changed to 0.75% by mass. In the powder in the present Example, all the yttrium was dissolved in the zirconia to form a solid solution, and the crystal phases of the zirconia were monoclinic zirconia and tetragonal zirconia. The monoclinic fraction was 87.0%, and the tetragonal fraction was 13.0%. In the powder, the crystallite size of the monoclinic zirconia (Dm) was 31.2 nm, and the crystallite size of the tetragonal zirconia (Dt) was 36.2 nm. Dm/Dt was 0.86 [nm/nm], and D50 was 0.35 $\mu$m. The BET specific surface area was 16.7 m$^2$/g.

Example 4

A powder and sintered bodies were obtained using the same procedure as in Example 1 except that the amount of the alumina sol added was changed to 1.25% by mass. In the powder in the present Example, all the yttrium was dissolved in the zirconia to form a solid solution, and the crystal phases of the zirconia were monoclinic zirconia and tetragonal zirconia. The monoclinic fraction was 87.0%, and the tetragonal fraction was 13.0%. In the powder, the crystallite size of the monoclinic zirconia (Dm) was 31.2 nm, and the crystallite size of the tetragonal zirconia (Dt) was 36.2 nm. Dm/Dt was 0.86 [nm/nm], and D50 was 0.36 $\mu$m. The BET specific surface area was 16.9 m$^2$/g.

Example 5

A powder and sintered bodies were obtained using the same procedure as in Example 1 except that the yttrium chloride hexahydrate was added to the aqueous hydrous zirconia sol solution such that the yttrium content was 1.9 mol%, that the amount of the $Mn_3O_4$ powder added was changed to 0.55% by mass, and that the amount of the alumina sol added was changed to 0.5% by mass. In the powder in the present Example, all the yttrium was dissolved in the zirconia to form a solid solution, and the crystal phases of the zirconia were monoclinic zirconia and tetragonal zirconia. The monoclinic fraction was 88.8%, and the tetragonal fraction was 11.2%. In the powder, the crystallite size of the monoclinic zirconia (Dm) was 32.2 nm, and the crystallite size of the tetragonal zirconia (Dt) was 36.8 nm. Dm/Dt was 0.88 [nm/nm], and D50 was 0.36 $\mu$m. The BET specific surface area was 15.8 m$^2$/g.

Example 6

An yttrium-containing zirconia powder with an yttrium content of 1.6 mol% was obtained using the same procedure as in Example 1 except that the calcination temperature was changed to 1100°C. The BET specific surface area of the obtained powder was 8.0 m$^2$/g.
A powder and sintered bodies were obtained using the same procedure as in Example 1 except that the obtained yttrium-containing zirconia powder was used. In the powder in the present Example, all the yttrium was dissolved in the zirconia to form a solid solution, and the crystal phases of the zirconia were monoclinic zirconia and tetragonal zirconia.

The monoclinic fraction was 97.3%, and the tetragonal fraction was 2.7%. In the powder, the crystallite size of the monoclinic zirconia (Dm) was 37.4 nm, and D50 was 0.51 $\mu$m. The BET specific surface area was 10.5 m$^2$/g.

Example 7

An yttrium-containing zirconia powder with an yttrium content of 1.6 mol% was obtained using the same procedure as in Example 1 except that the calcination temperature was changed to 1100°C. The BET specific surface area of the obtained powder was 8.0 m$^2$/g.

A powder and sintered bodies were obtained using the same procedure as in Example 1 except that the obtained yttrium-containing zirconia powder was used and that the alumina sol was added such that the alumina content was 0.55% by mass. In the powder in the present Example, all the yttrium was dissolved in the zirconia to form a solid solution, and the crystal phases of the zirconia were monoclinic zirconia and tetragonal zirconia. The monoclinic fraction was 96.9%, and the tetragonal fraction was 3.1%. In the powder, the crystallite size of the monoclinic zirconia (Dm) was 37.3 nm, and the crystallite size of the tetragonal zirconia (Dt) was 37.5 nm. Dm/Dt was 0.99 [nm/nm], and D50 was 0.50 $\mu$m. The BET specific surface area was 11.2 m$^2$/g.

Comparative Example 1

A powder and sintered bodies were obtained using the same procedure as in Example 3 except that the amount of the Mn$_3$O$_4$ powder added was changed to 0.66% by mass. In the powder in the present Example, all the yttrium was dissolved in the zirconia to form a solid solution, and the crystal phases of the zirconia were monoclinic zirconia and tetragonal zirconia. In the powder, the crystallite size of the monoclinic zirconia (Dm) was 31.2 nm, and D50 was 0.35 $\mu$m. The BET specific surface area was 16.8 m$^2$/g.

Comparative Example 2

A powder and sintered bodies were obtained using the same procedure as in Example 1 except that the amount of the Mn$_3$O$_4$ powder added was changed to 0.88% by mass. In the powder in the present Example, all the yttrium was dissolved in the zirconia to form a solid solution, and the crystal phases of the zirconia were monoclinic zirconia and tetragonal zirconia. The BET specific surface area was 16.8 m$^2$/g.

Comparative Example 3

An yttrium-containing zirconia powder with an yttrium content of 1.6 mol% was obtained using the same procedure as in Example 1 except that the calcination temperature was changed to 980°C. The BET specific surface area of the obtained powder was 14.1 m$^2$/g.

A powder and sintered bodies were obtained using the same procedure as in Example 1 except that the obtained yttrium-containing zirconia powder was used and that the alumina sol was not added. In the powder in the present Example, all the yttrium was dissolved in the zirconia to form a solid solution, and the crystal phases of the zirconia were monoclinic zirconia and tetragonal zirconia. The BET specific surface area was 17.7 m$^2$/g.

Comparative Example 4

An yttrium-containing zirconia powder with an yttrium content of 1.6 mol% was obtained using the same procedure as in Example 1 except that the calcination temperature was changed to 980°C. The BET specific surface area of the obtained powder was 14.1 m$^2$/g.

A powder and sintered bodies were obtained using the same procedure as in Example 1 except that the obtained yttrium-containing zirconia powder was used and that the amount of the alumina sol added was changed to 0.05% by mass. In the powder in the present Example, all the yttrium was dissolved in the zirconia to form a solid solution, and the crystal phases of the zirconia were monoclinic zirconia and tetragonal zirconia. The BET specific surface area was 17.8 m$^2$/g.

Comparative Example 5

A powder and sintered bodies were obtained using the same procedure as in Example 1 except that the amount of the Mn$_3$O$_4$ powder added was changed to 0.044% by mass. In the powder in the present Comparative Example, all the yttrium was dissolved in the zirconia to form a solid solution, and the crystal phases of the zirconia were monoclinic zirconia and tetragonal zirconia. The BET specific surface area was 16.5 m$^2$/g.

The results of the evaluation of the powders in the Examples and Comparative Examples are shown in Table 1. The results of the evaluation of the sintered bodies in the Examples are shown in Table 2, and the results of the evaluation of the sintered bodies in the Comparative Examples are shown in Table 3. In Tables 2 and 3, the "Variation in L*" is the difference between the maximum and minimum lightness L* values, and the "Variation in C*" is the difference between the maximum and minimum chroma C* values.

[Table 1]

| | $Y_2O_3$ [mol%] | $Mn_3O_4$ [% by mass] | $Al_2O_3$ [[% by mass] | Al/Mn ratio | BET specific surface area [$m^2$/g] |
|---|---|---|---|---|---|
| Example 1 | 1.6 | 0.44 | 0.25 | 0.57 | 15.6 |
| Example 2 | 1.6 | 0.44 | 0.50 | 1.14 | 16.1 |
| Example 3 | 1.6 | 0.44 | 0.75 | 1.70 | 16.7 |
| Example 4 | 1.6 | 0.44 | 1.25 | 2.84 | 16.9 |
| Example 5 | 1.9 | 0.55 | 0.50 | 0.91 | 15.8 |
| Example 6 | 1.6 | 0.44 | 0.25 | 0.57 | 10.5 |
| Example 7 | 1.6 | 0.44 | 0.50 | 1.14 | 11.2 |
| Comparative Example 1 | 1.6 | 0.66 | 0.75 | 1.14 | 16.8 |
| Comparative Example 2 | 1.6 | 0.88 | 0.25 | 0.28 | 16.8 |
| Comparative Example 3 | 1.6 | 0.44 | 0 | 0.00 | 17.7 |
| Comparative Example 4 | 1.6 | 0.44 | 0.05 | 0.11 | 17.8 |
| Comparative Example 5 | 1.6 | 0.044 | 0.25 | 5.68 | 16.5 |

In the powders in the Examples, the Al/Mn ratio was 0.5 or more and 3 or less, and the BET specific surface area was 10 $m^2$/g or more and 17 $m^2$/g or less. As can be seen from Examples 1 to 4, as the content of the alumina sol increases, the BET specific surface area tends to increase. Similarly, as can be seen from Examples 6 and 7, as the alumina sol increases, the BET specific surface area increases.

[Table 2]

| | Sintering temperature [°C] | Measured density [g/cm³] | Relative density | L* | Average L* | Variation in L* | Color tone a* | b* | C* | Average C* | Variation in C* |
|---|---|---|---|---|---|---|---|---|---|---|---|
| Example 1 | 1400 | 6.08 | 99.5% | 45.60 | | | 0.24 | -0.97 | 1.00 | | |
| | 1350 | 6.09 | 99.6% | 46.20 | | | 0.31 | -0.90 | 0.95 | | |
| | 1300 | 6.09 | 99.7% | 46.07 | 45.90 | 0.60 | 0.28 | -0.87 | 0.91 | 0.87 | 0.31 |
| | 1250 | 6.09 | 99.7% | 45.80 | | | 0.28 | -0.74 | 0.79 | | |
| | 1200 | 6.09 | 99.6% | 45.84 | | | 0.35 | -0.59 | 0.69 | | |
| Example 2 | 1400 | 6.07 | 99.4% | 45.92 | | | 0.29 | -0.85 | 0.90 | | |
| | 1350 | 6.07 | 99.5% | 46.30 | | | 0.32 | -0.82 | 6.88 | | |
| | 1300 | 6.09 | 99.8% | 45.91 | 45.95 | 0.60 | 0.25 | -0.95 | 0.98 | 0.83 | 0.33 |
| | 1250 | 6.08 | 99.6% | 45.70 | | | 0.28 | -0.59 | 0.65 | | |
| | 1200 | 6.08 | 99.7% | 45.90 | | | 0.30 | -0.69 | 0.75 | | |
| Example 3 | 1400 | 6.05 | 99.3% | 46.03 | | | 0.33 | -0.75 | 0.82 | | |
| | 1350 | 6.06 | 99.5% | 46.40 | | | 0.37 | -0.70 | 0.79 | | |
| | 1300 | 6.06 | 99.4% | 46.16 | 46.14 | 0.40 | 0.36 | -0.76 | 0.84 | 0.75 | 0.22 |
| | 1250 | 6.07 | 99.6% | 46.00 | | | 0.38 | -0.49 | 0.62 | | |
| | 1200 | 6.07 | 99.6% | 46.12 | | | 0.37 | -0.57 | 0.68 | | |
| Example 4 | 1400 | 6.00 | 98.8% | 46.31 | | | 0.40 | -0.61 | 0.73 | | |
| | 1350 | 6.05 | 99.6% | 46.80 | | | 0.46 | -0.56 | 0.72 | | |
| | 1300 | 6.05 | 99.5% | 46.84 | 46.52 | 0.74 | 0.54 | -0.63 | 0.83 | 0.69 | 0.28 |
| | 1250 | 6.06 | 99.7% | 46.10 | | | 0.55 | 0.22 | 0.59 | | |
| | 1200 | 6.06 | 99.7% | 46.56 | | | 0.55 | -0.02 | 0.55 | | |
| Example 5 | 1400 | 6.07 | 99.6% | 45.99 | | | 0.28 | -0.71 | 0.76 | | |
| | 1350 | 6.08 | 99.7% | 45.76 | | | 0.25 | -0.88 | 0.92 | | |
| | 1300 | 6.07 | 99.7% | 46.04 | 46.66 | 0.66 | 0.28 | -0.87 | 0.92 | 0.92 | 0.24 |
| | 1250 | 6.06 | 99.5% | 46.08 | | | 0.29 | -0.96 | 1.00 | | |
| | 1200 | 6.07 | 99.6% | 46.42 | | | 0.35 | -0.94 | 1.00 | | |

(continued)

| | Sintering temperature [°C] | Measured density [g/cm³] | Relative density | Color tone | | | | | | | |
| | | | | L* | Average L* | Variation in L* | a* | b* | C* | Average C* | Variation in C* |
|---|---|---|---|---|---|---|---|---|---|---|---|
| Example 6 | 1400 | 6.08 | 99.5% | 45.31 | 45.29 | 0.24 | 0.16 | -1.03 | 1.05 | 0.90 | 0.33 |
| | 1350 | 6.10 | 99.9% | 45.19 | | | 0.14 | -0.97 | 0.98 | | |
| | 1300 | 6.10 | 99.8% | 45.22 | | | 0.13 | -0.94 | 0.95 | | |
| | 1250 | 6.09 | 99.8% | 45.29 | | | 0.15 | -0.82 | 0.83 | | |
| | 1200 | 6.09 | 99.7% | 45.43 | | | 0.20 | -0.68 | 0.71 | | |
| Example 7 | 1400 | 5.98 | 98.1% | 45.34 | 45.30 | 0.57 | 0.16 | -0.88 | 0.90 | 0.74 | 0.32 |
| | 1350 | 6.09 | 99.8% | 45.07 | | | 0.17 | -0.86 | 6.88 | | |
| | 1300 | 6.08 | 99.7% | 45.16 | | | 0.26 | -0.54 | 0.60 | | |
| | 1250 | 6.09 | 99.8% | 45.32 | | | 0.27 | -0.72 | 0.77 | | |
| | 1200 | 6.07 | 99.5% | 45.63 | | | 0.29 | -0.50 | 0.58 | | |

[Table 3]

| | Sintering temperature [°C] | Measured density [g/cm³] | Relative density | L* | Average L* | Variation in L* | Color tone | | | | |
|---|---|---|---|---|---|---|---|---|---|---|---|
| | | | | | | | a* | b* | C* | Average C* | Variation in C* |
| Comparative Example 1 | 1400 | 5.84 | 95.8% | 44.90 | | | 0.18 | -0.58 | 0.61 | | |
| | 1350 | 5.96 | 97.8% | 46.00 | | | 0.28 | -0.75 | 0.80 | | |
| | 1300 | 5.97 | 98.0% | 46.46 | 45.89 | 1.60 | 0.41 | -0.68 | 0.79 | 0.68 | 0.22 |
| | 1250 | 5.93 | 97.3% | 46.50 | | | 0.4 | -0.42 | 0.58 | | |
| | 1200 | 6.07 | 99.7% | 45.60 | | | 0.33 | -0.5 | 0.60 | | |
| Comparative Example 2 | 1400 | | | | | | | | | | |
| | 1350 | | | Sintered bodies were cracked. | | | | | | | |
| | 1300 | | | | | | | | | | |
| | 1250 | | | | | | | | | | |
| | 1200 | | | | | | | | | | |
| Comparative Example 3 | 1400 | 6.09 | 99.5% | 45.43 | | | 0.12 | -0.77 | 0.78 | | |
| | 1350 | 6.08 | 99.4% | 46.50 | 46.27 | 1.41 | 0.26 | -0.42 | 0.49 | 0.58 | 0.29 |
| | 1300 | 6.08 | 99.4% | 46.84 | | | 0.32 | -0.46 | 0.56 | | |
| | 1250 | 6.09 | 99.5% | 46.30 | | | 0.26 | -0.42 | 0.49 | | |
| Comparative Example 4 | 1400 | 6.09 | 99.5% | 45.48 | | | 0.12 | -0.90 | 0.91 | | |
| | 1350 | 6.08 | 99.5% | 46.70 | 46.38 | 1.45 | 0.26 | -0.46 | 0.53 | 0.64 | 0.38 |
| | 1300 | 6.08 | 99.4% | 46.93 | | | 0.33 | -0.49 | 0.59 | | |
| | 1250 | 6.09 | 99.6% | 46.40 | | | 0.23 | -0.47 | 0.52 | | |
| Comparative Example 5 | 1200 | 6.05 | 98.9% | 63.99 | 59.06 | 9.86 | 1.97 | -1.55 | 2.51 | 2.59 | 0.17 |
| | 1400 | 6.09 | 99.6% | 54.13 | | | 1.56 | -2.17 | 2.67 | | |

As can be seen from Examples 1 to 4, in the sintered bodies in the Examples, the variation in L* was small, and the color tone variation was small. However, in the sintered bodies in Comparative Example 1 in which the content of $Mn_3O_4$ was 0.66% by mass, the variation in L* was large, i.e., 1.60. In the sintered bodies in Comparative Example 2 in which the content of $Mn_3O_4$ was 0.88% by mass, the sintered bodies were cracked. In the sintered bodies in Comparative Example 5 in which the content of $Mn_3O_4$ was 0.044% by mass, the variation in L* was 9.86, and the color tone variation was very large. In the sintered bodies in Comparative Example 3 in which the content of $Mn_3O_4$ was 0.44% by mass and $Al_2O_3$ was not contained, the variation in L* was 1.41. In the sintered bodies in Comparative Example 4 in which the content of $Mn_3O_4$ was 0.44% by mass and the content of $Al_2O_3$ was 0.05% by mass, the variation in L* was 1.45. In both Comparative Examples 3 and 4, the color tone variation was large.

The monoclinic intensity ratios in Example 1 were 1.08 (sintering temperature: 1250°C), 2.13 (sintering temperature: 1300°C) and 1.71 (sintering temperature: 1350°C), and the monoclinic intensity ratios in Example 2 were 1.20 (sintering temperature: 1250°C), 1.14 (sintering temperature: 1300°C) and 1.86 (sintering temperature: 1350°C).

The mechanical properties in the Examples and Comparative Examples were evaluated. The results are shown in Tables 4 and 5.

[Table 4]

| | Sintering temperature [°C] | Fracture toughness value [MPa·m$^{0.5}$] | Bending strength [MPa] |
|---|---|---|---|
| Example 3 | 1250 | 10.0 | 1270 |
| Example 4 | 1250 | 8.8 | 1460 |
| Comparative Example 3 | 1250 | 8.3 | 1210 |
| Comparative Example 4 | 1250 | 8.3 | 1250 |

As can be seen from Table 4, the fracture toughness values of the sintered bodies obtained by sintering the powders in the Examples at a low sintering temperature, i.e., 1250°C, were 8.5 MPa·m$^{0.5}$ or more. Moreover, although these sintered bodies contain the coloring elements and exhibit a black color, the fracture toughness value is high.

[Table 5]

| | Sintering temperature [°C] | Fracture toughness value [MPa·m$^{0.5}$] | Bending strength [MPa] |
|---|---|---|---|
| Example 1 | 1300 | 10.5 | 1190 |
| Example 2 | 1300 | 9.5 | 1280 |
| Example 3 | 1350 | 10.1 | 1260 |
| Example 4 | 1350 | 10.1 | 1250 |
| Example 5 | 1300 | 7.7 | 1411 |
| Example 6 | 1350 | 9.7 | 1294 |
| Example 7 | 1300 | 8.3 | 1291 |

As can be seen from Tables 4 and 5, as the sintering temperature increases, the fracture toughness value tends to increase. Even when the sintering temperature was 1300°C, high-toughness zirconia with a fracture toughness value of 7.5 MPa·m$^{0.5}$ or more or even 9.0 MPa·m$^{0.5}$ or more could be obtained. As can be seen from Table 5, even when the sintering temperature was higher, the fracture toughness value was 7.5 MPa·m$^{0.5}$ or more or even 9.0 MPa·m$^{0.5}$ or more, and the bending strength was 1000 MPa or more. Therefore, high-toughness zirconia sintered bodies having both a high bending strength and a high fracture toughness value were found to be obtained using the powders in the Examples.

Sintered bodies obtained in Example 1 were immersed in hot water at 134°C for 5 hours to determine a residual tetragonal fraction. The results are shown in Table 6.

[Table 6]

| | Sintering temperature [°C] | Residual tetragonal fraction |
|---|---|---|
| Example 1 | 1250 | 89.1% |
| | 1300 | 86.2% |
| | 1350 | 81.6% |

As can be seen, as the sintering temperature decreases, the residual tetragonal fraction tends to increase. The residual tetragonal fraction of the sintered body in Example 2 obtained at a sintering temperature of 1350°C was 86.3% and higher than that of the sintered body in Example 1 sintered at the same temperature.

The entire contents of the description, claims and abstract of Japanese Patent Application No. 2022-192258 filed on November 30, Reiwa 4 are cited herein and incorporated as the disclosure of the present description.

**Claims**

1. A powder comprising: zirconia containing yttrium as a stabilizing element; a manganese compound; and alumina,

   wherein a content of the stabilizing element in terms of oxide is 1.3 mol% or more and less than 2.0 mol% based on a total amount of the zirconia and the stabilizing element in terms of oxide,
   wherein a content of the alumina is 0.2% by mass or more and 1.5% by mass or less based on a total mass of the powder, and
   wherein a content of the manganese compound is 0.1% by mass or more and 0.6% by mass or less based on the total mass of the powder.

2. The powder according to claim 1, wherein a monoclinic fraction of the zirconia is more than 70%, wherein a crystallite size of monoclinic zirconia is more than 23 nm and 80 nm or less, and wherein the powder has a BET specific surface area of 25 $m^2$/g or less.

3. The powder according to claim 1 or 2, wherein the manganese compound is at least one selected from the group consisting of manganese monoxide, manganese dioxide, trimanganese dioxide and trimanganese tetroxide.

4. The powder according to any one of claims 1 to 3, wherein the alumina is at least one of an alumina sol and an alumina powder.

5. The powder according to any one of claims 1 to 4, wherein a ratio of a mass of the alumina in terms of $Al_2O_3$ to a mass of the manganese compound in terms of $Mn_3O_4$ is 0.1 or more.

6. The powder according to any one of claims 1 to 5, wherein crystal phases of the zirconia include monoclinic zirconia and tetragonal zirconia.

7. The powder according to claim 6, wherein a ratio of a crystallite size of the monoclinic zirconia to a crystallite size of the tetragonal zirconia is 0.7 or more and 1.2 or less.

8. The powder according to any one of claims 1 to 7, wherein the powder has a median size of 0.1 $\mu$m or more and 1.0 $\mu$m or less.

9. The powder according to any one of claims 1 to 8, wherein a volumetric particle size distribution curve is a multimodal distribution.

10. The powder according to any one of claims 1 to 9, wherein, when a procedure including charging a mold having a diameter of 25 mm with 3 ± 0.3 g of the powder and subjecting the powder to uniaxial compression molding at a pressure of 70 ± 5 MPa and CIP processing at a pressure of 196 ± 5 MPa is repeated to produce five green bodies and the five green bodies are pressureless sintered at respective sintering temperatures of 1200°C, 1250°C, 1300°C, 1350°C and 1400°C in an air atmosphere at a heating rate of 100°C/hour for a holding time at the respective sintering temperatures of 2 hours to prepare five sintered bodies, then a difference between maximum and minimum lightness L* values of the five sintered bodies is 1.4 or less.

11. A method for producing a sintered body, the method comprising the step of pressureless sintering a green body containing the powder according to any one of claims 1 to 10 at a temperature of 1200°C or higher and 1400°C or lower.

## INTERNATIONAL SEARCH REPORT

| International application No. |
| --- |
| **PCT/JP2023/042776** |

| A. | CLASSIFICATION OF SUBJECT MATTER |
| --- | --- |

*C01G 25/02*(2006.01)i; *C04B 35/488*(2006.01)i
FI:   C01G25/02; C04B35/488

According to International Patent Classification (IPC) or to both national classification and IPC

| B. | FIELDS SEARCHED |
| --- | --- |

Minimum documentation searched (classification system followed by classification symbols)

C01G25/00-C01G25/02; C04B35/00-C04B35/84

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 4-114964 A (DAIICHI KIGENSO KAGAKU KOGYO CO., LTD.) 15 April 1992 (1992-04-15)<br>claims, page 4, upper left column, line 14 to upper right column, line 8 | 1-11 |
| Y | | 1-11 |
| Y | JP 2021-88501 A (TOSOH CORP.) 10 June 2021 (2021-06-10)<br>claims, paragraphs [0002], [0058]-[0072], [0121], [0128] | 1-11 |
| X | JP 2016-26990 A (KYOCERA CORP.) 18 February 2016 (2016-02-18)<br>paragraphs [0006], [0040], [0050]-[0068] | 1, 3-5, 8, 10-11 |
| Y | | 1-11 |
| X | WO 2022/075346 A1 (DAIICHI KIGENSO KAGAKU KOGYO CO., LTD.) 14 April 2022 (2022-04-14)<br>paragraphs [0073], [0163]-[0165] | 1, 3-5, 8, 10-11 |
| Y | | 1-11 |

[✓] Further documents are listed in the continuation of Box C.    [✓] See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 December 2023** | **23 January 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/042776**

### C. DOCUMENTS CONSIDERED TO BE RELEVANT

| Category* | Citation of document, with indication, where appropriate, of the relevant passages | Relevant to claim No. |
|---|---|---|
| X | JP 2022-162546 A (TOSOH CORP.) 24 October 2022 (2022-10-24) paragraphs [0002], [0045], [0113], [0157] | 1, 3-5, 8, 10-11 |
| Y | | 1-11 |
| X | JP 2013-14473 A (TOSOH CORP.) 24 January 2013 (2013-01-24) paragraphs [0074], [0096], [0100] | 1, 3-5, 8, 10-11 |
| Y | | 1-11 |

Form PCT/ISA/210 (second sheet) (January 2015)

## INTERNATIONAL SEARCH REPORT
### Information on patent family members

International application No.

**PCT/JP2023/042776**

| Patent document cited in search report | | | Publication date (day/month/year) | Patent family member(s) | Publication date (day/month/year) |
|---|---|---|---|---|---|
| JP | 4-114964 | A | 15 April 1992 | (Family: none) | |
| JP | 2021-88501 | A | 10 June 2021 | US 2022/0212999 A1 claims, paragraphs [0002], [0090]-[0103], [0169], [0176] CN 113727957 A | |
| JP | 2016-26990 | A | 18 February 2016 | (Family: none) | |
| WO | 2022/075346 | A1 | 14 April 2022 | US 2022/0380261 A1 paragraphs [0136], [0324] CN 114787085 A | |
| JP | 2022-162546 | A | 24 October 2022 | US 2022/0332649 A1 paragraphs [0002], [0070], [0180], [0231] CN 115196962 A | |
| JP | 2013-14473 | A | 24 January 2013 | (Family: none) | |

Form PCT/ISA/210 (patent family annex) (January 2015)

**EP 4 628 450 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022034289 A
- WO 2022075346 A
- JP 2022192258 A